# EUROPÄISCHE PATENTANMELDUNG

(11) **EP 0 523 526 A2**
(43) Veröffentlichungstag der Anmeldung: **20.01.1993**
(21) Anmeldenummer: 92111572.1
(22) Anmeldetag: 08.07.1992
(51) Int. Cl.: H01M 10/48, G01R 31/36

(54) **Überwachungseinrichtung für Akkumulatoren**

(30) Priorität: 12.07.1991 DE 4123210
(71) Anmelder: SIEMENS AKTIENGESELLSCHAFT, D-80333 München (DE)
(72) Erfinder: Koch, Georg, W-8044 Unterschleissheim (DE)

(57) **Zusammenfassung**

Zur Überwachung des Ladezustands und der Kapazität von Akkumulatoren, an die ein Ladegerät anschließbar ist, ist ein dem Akku fest zugeordneter, insbesondere im Akkugehäuse angebrachter Datenspeicher vorgesehen, in dem der aktuelle Ladezustand in einem Speicherbereich gespeichert wird. Diese Einrichtung ist bei Geräten mit Stromversorgung aus Akkumulatoren, beispielsweise bei Mobiltelefonen anwendbar.

## Beschreibung

Die Erfindung bezieht sich auf eine Einrichtung zur Überwachung des Ladezustands und der Kapazität von an ein Ladegerät anschließbaren Akkumulatoren.

Die Auswertung des Ladezustands eines Akkumulators wird z.B. dazu benötigt, den Akkumulator auf schonende Weise in kurzer Zeit vollzuladen und anschließend auf Erhaltungsladung umzuschalten, ohne ihn zu überladen und damit in seiner Lebensdauer negativ zu beeinträchtigen. Die Anzeige ist für den Benutzer hilfreich, um ihm eine Abschätzung zu ermöglichen, wie lange er mit dieser Akkuladung sein Gerät noch betreiben kann, bzw. ob der Akkumulator das Ende seiner Lebensdauer erreicht hat. Insbesondere besteht das Problem bei Wechselakkus, da man dem Akkumulator von außen den Ladezustand weder ansehen noch mit vertretbarem Aufwand in kurzer Zeit ermitteln kann.

Üblicherweise wird versucht, eine Ausage über den Ladezustand zu treffen, indem das elektrische Verhalten des Akkumulators (Leerlaufspannung, Innenwiderstand) ermittelt wird, da dies vom Ladezustand abhängt. Es haben aber auch andere Parameter, wie z.B. die Temperatur, das Alter und die Technologie sehr starken Einfluß auf das Belastungsverhalten, so daß es sehr schwierig bis unmöglich ist, mit vertretbarem Aufwand eine einigermaßen genaue Ausage über den Ladezustand zu treffen.

Der Erfindung liegt die Aufgabe zugrunde, eine Einrichtung zu schaffen, die es ermöglicht, die aktuell eingelagerte und somit verfügbare sowie die maximal mögliche Kapazität eines Akkumulators anzuzeigen bzw. auszuwerten.

Diese Aufgabe wird gemäß der Erfindung gelöst mit einem dem Akkumulator fest zugeordneten, insbesondere im Akkugehäuse angebrachten Datenspeicher, in dem der aktuelle Ladezustand in einem Speicherbereich gespeichert wird.

Vorteilhafte Ausgestaltungen und Weiterbildungen des Erfindungsgegenstandes sind in den Unteransprüchen angegeben.

Nachstehend wird die Erfindung anhand von in der Zeichnung dargestellten Ausführungsbeispielen näher erläutert.

Es zeigen
- Figur 1: eine Einrichtung mit Speicherung in einem EEPROM,
- Figur 2: eine Einrichtung mit Speicherung in einem RAM,
- Figur 3: eine Einrichtung mit Speicherung in einem Mikrocontroller mit Temperaturmessung und
- Figur 4: eine Einrichtung mit Speicherung in einem Mikrocontroller mit Temperatur- und Strommessung.

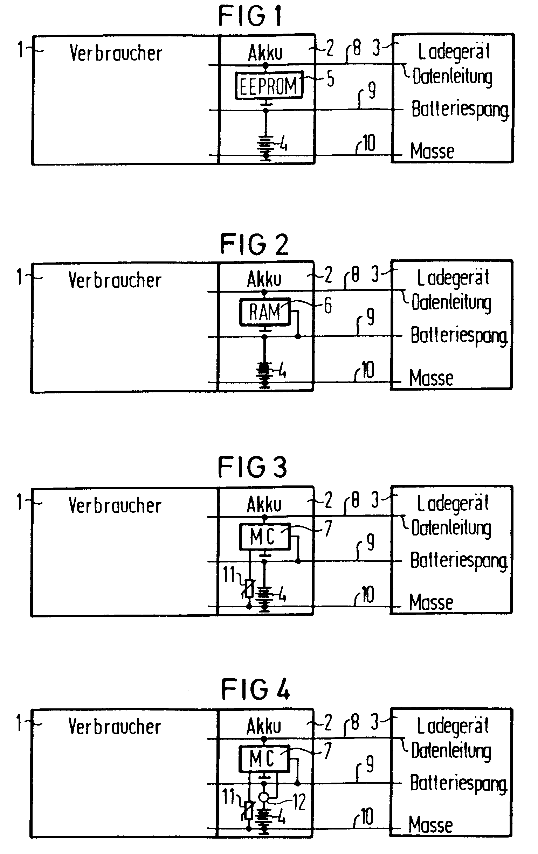

Bei den Einrichtungen nach den Figuren 1 bis 4 ist der Verbraucher jeweils mit 1, der Akkumulator mit 2, dessen Zellen mit 4 und das Ladegerät mit 3 bezeichnet. Akkumulator 2 und Ladegerät 3 sind jeweils über eine Datenleitung 8, eine Leitung 9 für Batteriespannung und eine Masseleitung 10 lösbar miteinander verbunden. Die Darstellung in den Figuren zeigt den Zustand des angeschlossenen Ladegerätes. Anschluß- bzw. Verbindungselemente sind zur Vereinfachung weggelassen. Der Akkumulator 2 ist unmittelbar am Verbraucher 1 angeordnet. Dem Akkumulator fest zugeordnet, insbesondere im Akkugehäuse angebracht, ist ein Datenspeicher, in dem der aktuelle Ladezustand in einem Ladebereich gespeichert wird. Dieser Datenspeicher kann aus verschiedenen Elementen bestehen. Bei der Einrichtung nach Figur 1 besteht er aus einem EEPROM 5, bei der Einrichtung nach Figur 2 aus einem RAM 6 und bei den Einrichtungen nach Figur 3 und 4 aus einem Mikrocontroller 7 mit entsprechendem Speicher. Im Falle der Speicherung in einem RAM bzw. Mikrocontroller MC mit RAM erfolgt die Versorgung dieses Bausteins direkt aus dem Akkumulator.

Im Speicher, der vorzugsweise zur Einsparung von Leitungen seriell bedienbar ausgeführt ist, wird in einem Speicherbereich der aktuelle Ladezustand gespeichert. Dieser Wert wird dermaßen auf dem aktuellen Stand gehalten, daß zum einen der Stromverbraucher den Wert ausliest und für jede Ladungseinheit, die dem Akkumulator entnommen wird, den Wert erniedrigt. Als Grundlage für eine Ladungseinheit kann sowohl ein Meßwert (Strommessung) dienen, als auch ein fester Wert, der von der Prozeßsteuerung des Verbrauchers aus dem jeweiligen Betriebszustand ermittelt wird. Zum anderen wird vom Ladegerät der Wert ebenfalls ausgelesen und in umgekehrter Weise pro Ladungseinheit unter Berücksichtigung des Ladefaktors erhöht. Der geänderte Wert wird sowohl von dem Verbraucher als auch vom Ladegerät nach der erfolgten Änderung zurückgespeichert.

Bei Verwendung eines Mikrocontrollers MC, wie es beispielsweise in Figur 3 der Fall ist, werden vom Verbraucher 1 und Ladegerät 3 den Ladungseinheiten entsprechende Impulse zu diesem Prozessor geleitet und von diesem der aktuelle Ladungszustand erfaßt und in seinem RAM oder EEPROM gespeichert. In diesem Fall kann der Prozessor unter Berücksichtigung der Zellentemperatur, die er mit Hilfe eines A/D-Wandlers auch messen kann, die Selbstentladung berücksichtigen und in die Ladungsbilanz aufnehmen. Die von einem Temperaturfühler 11 erfaßte Zellentemperatur kann über die serielle Schnittstelle auch an das Ladegerät 3 zur Ladekontrolle gemeldet werden und benötigt somit keine eigene Leitung.

Bei Verwendung eines Mikrocontrollers ist auch eine Strommessung im Akkumulator möglich. Eine Einrichtung hierzu zeigt Figur 4. Der Mikrocontroller 7 führt laufend in festen Zeitabständen eine Strommessung mittels einer Meßeinrichtung 12 durch und aktualisiert den Wert je nach Vorzeichen des Meßergebnisses (Ladung oder Entladung). Dies erfolgt unter Berücksichtigung des Ladefaktors, wobei je nach Akkutechnologie und Ladeverfahren 20 % bis 40 % mehr Ladung eingelagert werden muß als später entnommen werden kann.

In einem weiteren Speicherbereich des dem Mikrocontroller zugeordneten Speichers kann ein Wert abgespeichert und verändert werden, der dem Maximalwert des Ladungszählers entspricht. Dieser kann aus dem Entladeschluß und dem Ladeschluß ermittelt werden, der im praktischen Betrieb vom Verbraucher (Unterspannungserkennung) bzw. Ladegerät (z. B. durch Übertemperaturabschaltung, dU- oder dT-Abschaltung) erkannt wird. Dieser Wert ist dann ein Maß für die Speicherkapazität des Akkus und wird im Laufe der Lebensdauer des Akkus adaptiv auf dem aktuellen Stand gehalten, so daß jederzeit nicht nur eine Aussage über den Ladezustand, sondern auch über die Speicherkapazität getroffen werden kann. Wird die aktuell eingelagerte Ladung zur Speicherkapazität ins Verhältnis gesetzt, so erhält man den relativen Wert der eingelagerten Ladung zur maximal mit diesem Akku möglichen. Der Ladezustand läßt sich somit absolut in Amperestunden und relativ in Prozent anzeigen.

## Patentansprüche

1. Einrichtung zur Überwachung des Ladezustands und der Kapazität von an ein Ladegerät anschließbaren Akkumulatoren, **gekennzeichnet** durch einen dem Akkumulator fest zugeordneten, insbesondere im Akkugehäuse angebrachten Datenspeicher, in dem der aktuelle Ladezustand in einem Speicherbereich gespeichert wird.

2. Einrichtung nach Anspruch 1, **dadurch gekennzeichnet,** daß der Datenspeicher aus einem EEPROM besteht.

3. Einrichtung nach Anspruch 1, **dadurch gekennzeichnet,** daß der Datenspeicher aus einem RAM besteht.

4. Einrichtung nach Anspruch 1, **dadurch gekennzeichnet,** daß der Datenspeicher aus einem Mikrocontroller mit entsprechendem Speicher besteht.

5. Einrichtung nach einem der Ansprüche 1 bis 3, **dadurch gekennzeichnet,** daß die Speicherung des aktuellen Ladezustandes im Speicherbereich in der Weise erfolgt, daß einerseits der Stromverbraucher den aktuellen Wert ausliest und für jede dem Akku entnommene Ladungseinheit den Wert erniedrigt und andererseits der Wert vom Ladegerät ausgelesen und in umgekehrter Weise pro Ladungseinheit unter Berücksichtigung des Ladefaktors erhöht wird, und der geänderte Wert vom Verbraucher und vom Ladegerät nach erfolgter Änderung zurückgespeichert wird.

6. Einrichtung nach Anspruch 4, **dadurch gekennzeichnet,** daß vom Verbraucher und Ladegerät den Ladungseinheiten entsprechende Impulse zum Prozessor geleitet werden und von diesem der aktuelle Ladungszustand erfaßt und in seinem internen RAM bzw. EEPROM gespeichert wird.

7. Einrichtung nach Anspruch 4, **dadurch gekennzeichnet,** daß der Mikrocontroller laufend in festen Zeitabständen eine Strommessung durchführt und entsprechend dem Vorzeichen des Meßergebnisses den Wert aktualisiert.

8. Einrichtung nach einem der vorgehenden Ansprüche, **dadurch gekennzeichnet,** daß in einem weiteren Speicherbereich ein dem Maximalwert des Ladungszählers entsprechender Wert abgespeichert und verändert wird, der aus dem Entladeschluß und dem Ladeschluß ermittelt wird und somit ein Maß für die Speicherkapazität dieses Akkus wiedergibt.
